# EUROPÄISCHE PATENTSCHRIFT

(11) **EP 1 851 450 B1**
(45) Veröffentlichungstag und Bekanntmachung des Hinweises auf die Patenterteilung: **17.04.2013**
(21) Anmeldenummer: 06707149.8
(22) Anmeldetag: 22.02.2006
(51) Int. Cl.: F16C 17/10, F16C 33/14, F16C 33/24, F16C 43/02, B23K 26/24, B23K 26/28, B23K 37/053

(54) **GLEITLAGERBUCHSE, VERWENDUNG UND HERSTELLUNG EINER GLEITLAGERBUCHSE**
PLAIN BEARING BUSH, USE OF THE SAME, AND PRODUCTION THEREOF
COUSSINET LISSE, UTILISATION ET PRODUCTION D'UN COUSSINET LISSE

(30) Priorität: 22.02.2005 DE 102005009092
(43) Veröffentlichungstag der Anmeldung: 07.11.2007
(73) Patentinhaber: Federal-Mogul Wiesbaden GmbH & Co.KG, 65201 Wiesbaden (DE)
(72) Erfinder: KIRCHHOF, Klaus, 65527 Niedernhausen (DE); STIEP, Hans-Willi, 55546 Biebelsheim (DE)
(74) Vertreter: Mehler Achler
(86) Internationale Anmeldenummer: PCT/EP2006/001582
(87) Internationale Veröffentlichungsnummer: WO 2006/089721

(56) Entgegenhaltungen:
- DE-A1- 10 048 256
- DE-A1- 19 524 757
- DE-A1- 19 823 316
- DE-U1- 8 712 192

## Beschreibung

Die Erfindung betrifft eine Gleitlagerbuchse mit mindestens einer Anlaufscheibe gemäß dem Oberbegriff von Patentanspruch 1. Die Erfindung bezieht sich auch auf ein Verfahren zur Herstellung einer solchen Gleitlagerbuchse.

Gerollte Gleitlagerbuchsen mit Bund bestehen in der Regel aus einem Lagerrücken aus Stahl und einem auf der Innenseite aufgebrachten Lagermetall oder Kunststoffmaterial als Gleitschicht. Solche Gleitlagerbuchsen werden einstückig hergestellt, wobei eine zylindrische Buchse im Randbereich durch Umbiegen einen Bund erhält. Diesem Verfahren sind jedoch Grenzen gesetzt. Ab einer bestimmten Buchsengröße und Materialdicke lassen sich die Buchsen nicht mehr in der gewünschten Weise umformen.

Einstückig hergestellte Gleitlagerbuchsen haben im Bereich des Bundes wegen der Rundung des Bundes einen schlechten Traganteil und besitzen im Bereich des Stoßes einen V-förmigen Spalt, so dass keine geschlossene Fläche vorhanden ist.

Aus der DE 34 25 180 A1 ist ein Verfahren zum Herstellen von Lagerschalen mit fest verbundenen Schulterflanschen in Form von Halbringen bekannt. Die Lagerschalen und die Schulterflansche werden getrennt hergestellt und besitzen auf einem Stahlrücken eine Gleitbeschichtung. Die Halbringe weisen an ihrem Innenumfang einen mittleren Bereich mit Vorsprüngen auf, wobei der Radius des Innenumfangs gleich dem der Sitze der Lagerschale ist. Diese Sitze sind abgesetzte Außenflächen am Rand der Lagerschale, auf die die Halbschalen aufgesetzt und anschließend ebenfalls von außen durch Buckelschweißen oder Kondensator-Entladungsschweißen miteinander verbunden werden. Das Schweißen muss schnell durchgeführt werden, damit keine Schäden an den Gleitbeschichtungen auftreten. Ein weiterer Nachteil besteht darin, dass die Halbschalen lediglich an den Vorsprüngen mit den Lagerschalen befestigt sind.

Ein anderes Verfahren zur Herstellung von Lagerschalen mit Axiallagerelementen ist aus der US 4,288,895 bekannt. Die die Axiallagerelemente bildenden Halbringe werden an der Stirnseite der Lagerschale verschweißt. Um eine Beschädigung der Gleitschichten zu verhindern, sind sowohl die Lagerschale als auch der Halbring mit einer ausgeprägten Phase versehen, wodurch das Gleitschichtmaterial im Schweißbereich entfernt wird. Der Halbring weist außerdem einen deutlich größeren Innenradius auf als der Innenradius der Lagerschale. Der radiale Dickenbereich der Lagerschale, der mit dem Halbring verschweißt wird, liegt zwischen dem 0,2- und dem 0,7-fachen der Lagerschalendicke, um lokale Überhitzungen der Gleitschicht zu verhindern. Das Verschweißen erfolgt mittels eines Laserstrahls von der Innenseite her, wobei ein Winkel von 30° bis 60° zur Achse der Lagerschale einzuhalten ist.

Aus der EP 0 306 065 A2 sind gerollte Buchsen für Gleitlager bekannt, die aus einem Bandabschnitt hergestellt werden und eine über die gesamte Lagerbreite gehende Stoßfuge aufweisen. Um die zulässigen Abmaßbereiche der Nennmaße einzuengen, ist die Stoßfuge durch Ladungsträgerstrahlschweißen geschlossen.

Die EP 0 444 755 B1 beschreibt eine geflanschte Lagerbuchse. Bei dieser so genannten gebauten Lagerbuchse weist das Radiallagerteil im Randbereich Verformungen auf, die im zusammengebauten Zustand in entsprechende Aussparungen am Innenumfang der angesetzten Anlaufscheibe eingreifen. Ein Verschweißen von Lagerbuchse und Anlaufscheibe findet nicht statt.

In der DE 87 12 192 U1 wird ein Bundlager mit einem halbschalig ausgebildeten Radiallagerteil und einem Axiallagerteil beschrieben, welches an zumindest einer der Stirnseiten des Radiallagerteils angeordnet und auf diesem insbesondere einstückig verbunden ist.

Aufgabe der Erfindung ist es, eine Gleitlagerbuchse mit Anlaufscheibe zu schaffen, die dauerhaft miteinander verbunden sind, wobei die Herstellung eine Massenproduktion auf einfache Weise ermöglichen soll.

Diese Aufgabe wird mit einer Gleitlagerbuchse gelöst, bei der die Anlaufscheibe ein- oder mehrteilig ausgeführt ist, die Anlaufscheibe an der Stirnseite der Gleitlagerbuchse mittels Laserschweißen befestigt ist und r < d ist, wobei d die radiale Dicke der Gleitlagerbuchse und r die radiale Erstreckung der Kontaktfläche der Stirnfläche der Gleitlagerbuchse bezeichnet.

Die Anlaufscheibe kann ein- oder mehrteilig, vorzugsweise zweiteilig, ausgeführt sein und wird vorzugsweise aus einem Bandmaterial ausgestanzt. Die einteilige Ausführung besteht aus einem Anlaufring. Die mehrteilige Variante erlaubt ein Ausstanzen mit minimiertem Abfall.

Das Laserschweißen stellt ein einfaches und schnelles Verfahren zum dauerhaften Verbinden von Anlaufscheibe und Gleitlagerbuchse dar. Darüber hinaus ist das LaserSchweißen materialschonend, weil nur eine lokale Erwärmung an den zu verbindenden Komponenten auftritt. Das Laserschweißen ist daher von Vorteil bei Gleitlagerbuchsen und Anlaufscheiben, die mit einem wärmeempfindlichen Gleitschichtmaterial versehen sind.

Die Anlaufscheibe deckt nicht die gesamte Stirnfläche der Gleitlagerbuchse ab, damit der Laserstrahl nicht auf die auf der Innenseite der Buchse befindliche Gleitschicht auftrifft und diese beschädigt. Es ist deshalb r < d, insbesondere r ≤ (d-dₛ), wobei dₛ die Dicke der Gleitschicht, d die radiale Dicke der Gleitlagerbuchse und r die radiale Erstreckung der Kontaktfläche an der Stirnfläche der Gleitlagerbuchse bezeichnen.

Vorzugsweise ist die Anlaufscheibe an der Stirnseite der Gleitlagerbuchse mittels innenseitigem Laserschweißen befestigt, bei dem der Laserstrahl auf die Innenseite von Anlaufscheibe und Gleitlagerbuchse gerichtet ist.

Dadurch, dass die Anlaufscheibe an der Stirnfläche der Gleitlagerbuchse anliegt, befindet sich die Laserschweißnaht an der Innenseite, d.h. an dem Innenumfang von Anlaufscheibe und Gleitlagerbuchse bzw. deren Stirnfläche. Es hat sich gezeigt, dass im Gegensatz zu einer Schweißnaht an der Außenseite eine stabilere Befestigung erzielt werden kann. Außerdem steht die gesamte Außenumfangsfläche der Gleitlagerbuchse zum Erfassen und Halten der Buchse zur Verfügung, weil vor dem Schweißen die Gleitlagerbuchse vorzugsweise in einen Aufnahmering eingepresst werden muss, dessen Abmessungen dem Enddurchmesser der Buchse entspricht.

Vorzugsweise beträgt r ≥ 0,5*d, insbesondere > 0,7*d und besonders bevorzugt > 0,8*d. Der Wert r wird hierbei vom Außenrand der Stirnfläche gemessen. Dies bedeutet, dass mehr als 50% der Stirnfläche als Kontakt- oder Anlagefläche für die Anlaufscheibe genutzt wird.

Vorzugsweise erstreckt sich die Gleitschicht der Gleitlagerbuchse bis zu ihrer Stirnfläche. Bei Einhaltung der Bedingungen r ≤ (d-dₛ) ist es nicht erforderlich, die Gleitschicht der Gleitlagerbuchse im Bereich vor der Stirnfläche abzutragen. Vorzugsweise wird r ≤0,9*(d-dₛ) gewählt. Weitere bevorzugte Werte für die Untergrenze sind r ≥0,7*(d-dₛ).

Die Gleitschichten von Gleitlagerbuchse und Anlaufscheibe können aus denselben oder aus unterschiedlichen Materialien bestehen. Die Gleitschichten können aus identischen oder unterschiedlichen metallischen Legierungen oder aus identischen oder unterschiedlichen Kunststoffmaterialien bestehen, wobei auch eine Gleitschicht aus einer metallischen Legierung mit einer Gleitschicht aus Kunststoff kombiniert sein kann. Je nach Einsatzzweck ist eine Anpassung der Gleitschichtmaterialien möglich.

Zwischen der Stahlschicht und der Gleitschicht ist vorzugsweise eine Sinterbronze vorgesehen. Gleitlagerverbundwerkstoffe werden sowohl für die Anlaufscheibe als auch für die Gleitlagerbuchse verwendet.

Als Gleitschichtmaterialien kommen beispielsweise Al-Sn-Legierungen oder Blei-Zinn-Kupferlegierungen in Frage.

Vorzugsweise besteht mindestens eine Gleitschicht aus einem wärmeempfindlichen Material. Zu den wärmeempfindlichen Materialien zählen insbesondere Kunststoffmaterialien. Als Kunststoffmaterialien sind PTFE mit MoS2, PTFE mit PbO, POM oder Polyetheretherketon bevorzugt.

Bevorzugte Verwendungen dieser Gleitlagerbuchsen mit einer oder zwei Anlaufscheiben sind in Dieseleinspritzpumpen, in automatischen Getrieben, in Lüftermotoren, insbesondere für Lastkraftwagen, oder in Schwingungsdämpfern.

Vorzugsweise weisen die Gleitlagerbuchsen Innendurchmesser im Bereich von 15 - 180 mm, insbesondere von 15 - 60 mm und 80 - 180 mm, auf.

Hergestellt wird die Gleitlagerbuchse nach einem Verfahren mit folgenden Verfahrensschritten:
- Rollen einer Platine aus Stahl mit mindestens einer Gleitschicht zu einer Gleitlagerbuchse,
- Herstellen einer ein- oder mehrteiligen Anlaufscheibe aus einem Band aus Stahl mit mindestens einer Gleitschicht,
- Einsetzen der Gleitlagerbuchse in eine Spannvorrichtung, in der die Gleitlagerbuchse ihren endgültigen Durchmesser erhält,
- Ansetzen und Fixieren der Anlaufscheibe an der Stirnseite der Gleitlagerbuchse,
- Verschweißen der Anlaufscheibe mit der Gleitlagerbuchse mittels eines Laserstrahls und
- Entnahme der Gleitlagerbuchse aus der Spannvorrichtung.

Vorzugsweise wird zum Verschweißen der Laserstrahl auf die Innenseite von Anlaufscheibe und Gleitlagerbuchse gerichtet. Der Laserstrahl trifft hierbei auf den Spaltbereich zwischen Anlaufscheibe und Stirnfläche der Gleitlagerbuchse auf. Der Schweißbereich erstreckt sich somit in radialer Richtung.

Es hat sich als besonders günstig herausgestellt, wenn der Laserstrahl unter einem Winkel α von 0° - 20° vorzugsweise 5° - 20° zur
Senkrechten auf der Achse der Gleitlagerbuchse ausgerichtet wird. Der Winkel α = 0° kann dadurch realisiert werden, dass der Laserstrahl über eine optische Einrichtung auf die Innenseite von Anlaufscheibe und Gleitlagerbuchse gelenkt wird.

Weitere bevorzugte Winkelbereiche sind 5° bis 10°, 5° bis 15° und 10° bis 15°. Hierbei wird vorzugsweise die Gleitlagerbuchse mit Anlaufscheibe unter dem Laserstrahl rotiert.

Beispielhafte Ausführungsformen der Erfindung werden nachfolgend an Hand der Zeichnungen erläutert. Es zeigen:
- Fign. 1a,b: eine Gleitlagerbuchse mit einer Anlaufscheibe gemäß zweier Ausführungsformen in perspektivischer Darstellung,
- Fig. 2: einen Längsschnitt durch die in Fig. 1 a gezeigte Gleitlagerbuchse und
- Fig. 3: einen Schnitt durch die Spannvorrichtung mit Gleitlagerbuchse und Anlaufscheibe.

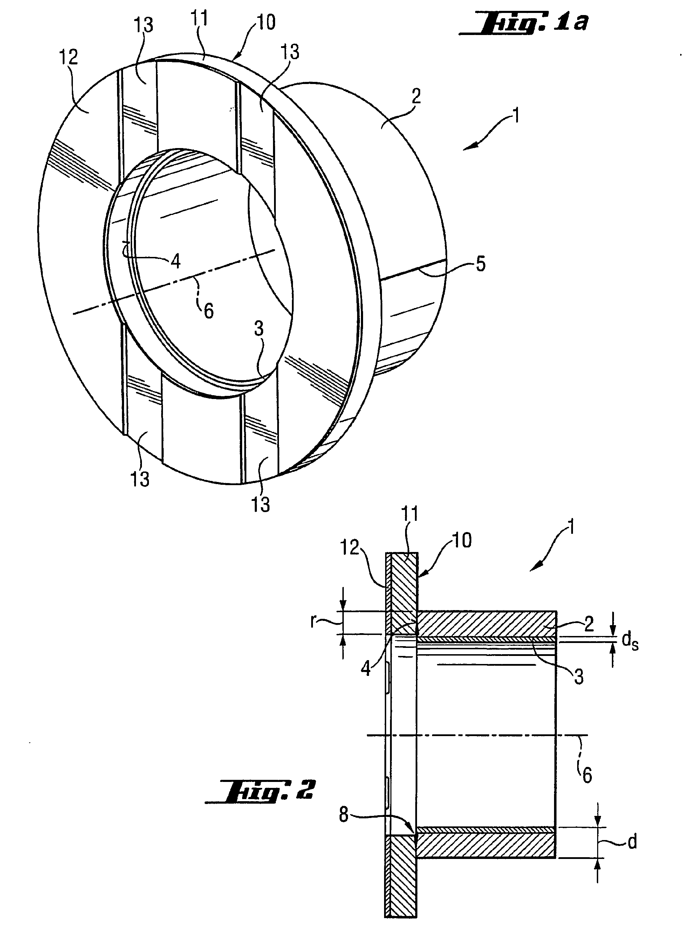

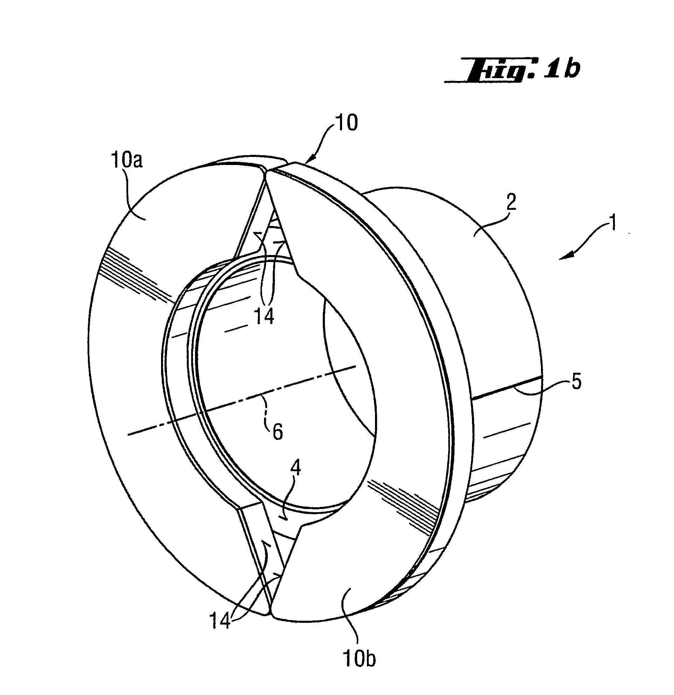

In der Fig. 1 a ist eine Gleitlagerbuchse 1 mit Anlaufscheibe 10 dargestellt. Es handelt sich um eine gerollte Gleitlagerbuchse mit einer Stoßfuge 5. An der Stirnfläche 4 ist die Anlaufscheibe 10, die mehrere Nuten 13 besitzen kann, angeschweißt.

In der Fig. 1b ist eine weitere Ausführungsform dargestellt, bei der die Anlaufscheibe 10 aus zwei Teilringen 10a,b gebildet wird. Jeder Teilring 10a,b besitzt an seinem Ende schräge Ausschnitte 14, die herstellungsbedingt sind. Es ist dadurch möglich, die Teilringe 10a,b in enger Reihenfolge nebeneinander auszustanzen. Dadurch wird der Abfall minimiert.

In der Fig. 2 ist ein Schnitt durch die in Fig. 1 gezeigte Gleitlagerbuchse 1 dargestellt. Die Gleitlagerbuchse 1 besteht in der hier gezeigten Darstellung aus einem Stahlrücken oder Stahlschicht 2, auf dessen Innenfläche eine Gleitschicht 3 aufgebracht ist. Auch die Anlaufscheibe 10 weist eine Stahlschicht 11 mit einer Gleitschicht 12 auf. Die Gleitschichten 3,12 können aus metallischen Legierungen und/oder Kunststoffmaterialien bestehen.

Der Innendurchmesser der Anlaufscheibe 10 ist größer als der Innendurchmesser der Gleitlagerbuchse 1, so dass ein Teil der Stirnfläche 4 frei liegt. Die radiale Erstreckung r der Kontaktfläche von Anlaufscheibe 10 und Gleitlagerbuchse 1 beträgt ca. 0,75 mal d, wobei d die radiale Dicke der Gleitlagerbuchse 1 bezeichnet.

Mit dₛ wird die Dicke der Gleitschicht 3 der Buchse 1 bezeichnet. Dadurch, dass in der in Fig. 2 gezeigten beispielhaften Darstellung r ≤ (d-dₛ) gewählt worden ist, kann sich die Gleitschicht 3 der Buchse 1 bis zur Stirnfläche 4 erstrecken, weil der Laserstrahl beim Auftreffen auf die innenliegende Fügestelle 8 die Gleitschicht 3 nicht beschädigen kann.

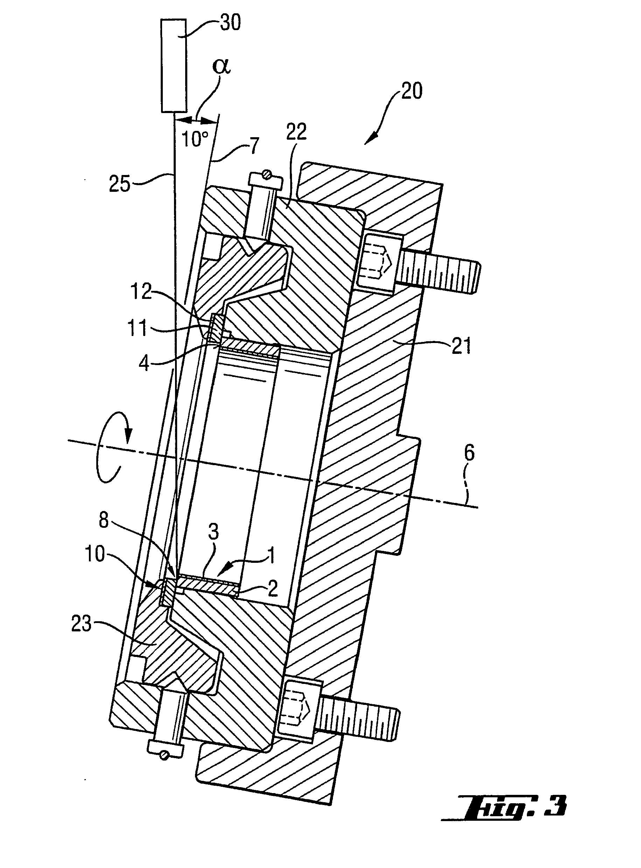

Die Fig. 3 zeigt einen Schnitt durch die Spannvorrichtung 20. Nachdem die Gleitlagerbuchse 1 gerollt worden ist, wird sie in den Spannring 22 eingepresst, der in eine Aufnahmeplatte 21 eingelegt ist. Die Aufnahmeplatte 21 ist auf einem rotierenden Drehtisch (nicht dargestellt) befestigt. Anschließend wird die vorgefertigte Anlaufscheibe 10 an der Stirnfläche 4 positioniert und mittels des Fixierrings 23 in der gewünschten Position gehalten.

Die gesamte Vorrichtung wird unter den von einem Laser 30 erzeugten Laserstrahl 25 geschwenkt, der unter einem Winkel α von ca. 10° auf die Fügestelle 8 auftrifft. Der Winkel α ist auf die Senkrechte 7 auf der Achse 6 der Gleitlagerbuchse 1 bezogen.

Der Laserstrahl 25 trifft auf die Innenseite von Anlaufscheibe 10 und Gleitlagerbuchse 1 auf. Während des Schweißvorgangs wird die Spannvorrichtung 20 unter dem Laserstrahl 25 gedreht, so dass der gesamte Innenumfang verschweißt wird. Die Schweißnaht entsteht hierbei im Spalt zwischen Stirnfläche 4 und Anlaufscheibe 10.

Nach der Beendigung des Schweißvorgangs wird die fertige Gleitlagerbuchse 1 mit angeschweißter Anlaufscheibe 10 aus der Spannvorrichtung entfernt.

### Bezugszeichenliste

- 1: Gleitlagerbuchse
- 2: Stahlschicht
- 3: Gleitschicht
- 4: Stirnfläche
- 5: Stoßfuge
- 6: Achse der Gleitlagerbuchse
- 7: Senkrechte auf Achse 6
- 8: Fügestelle

- 10: Anlaufscheibe
- 10a,b: Teilring
- 11: Stahlschicht
- 12: Gleitschicht
- 13: Nut
- 14: Ausschnitte

- 20: Spannvorrichtung
- 21: Aufnahmeplatte
- 22: Spannring
- 23: Fixierring
- 25: Laserstrahl
- 30: Laser

## Patentansprüche

1. Gleitlagerbuchse mit mindestens einer Anlaufscheibe (10), wobei die Gleitlagerbuchse (1) und die Anlaufscheibe (10) jeweils einen Stahlrücken (2,11) und mindestens eine Gleitschicht (3,12) aufweisen, wobei die Anlaufscheibe (10) ein- oder mehrteilig ausgeführt ist, **dadurch gekennzeichnet dass** die Anlaufscheibe (10) an der Stirnseite (4) der Gleitlagerbuchse (1) mittels Laserschweißen befestigt ist und dass r < d ist, wobei d die radiale Dicke der Gleitlagerbuchse (1) und r die radiale Erstreckung der Kontaktfläche der Stirnfläche (4) der Gleitlagerbuchse (1) bezeichnet.

2. Gleitlagerbuchse nach Anspruch 1, **dadurch gekennzeichnet, dass** die Anlaufscheibe (10) an der Stirnseite der Gleitlagerbuchse (1) mittels innenseitigem Laserschweißen befestigt ist, bei dem der Laserstrahl (25) auf die Innenseite von Anlaufscheibe (10) und Gleitlagerbuchse (1) gerichtet ist.

3. Gleitlagerbuchse nach Anspruch 1 oder 2, **dadurch gekennzeichnet, dass** r ≥ 0,5*d ist.

4. Gleitlagerbuchse nach Anspruch 3, **dadurch gekennzeichnet, dass** r > 0,7*d ist.

5. Gleitlagerbuchse nach Anspruch 3 oder 4, **dadurch gekennzeichnet, dass** r > 0,8*d ist.

6. Gleitlagerbuchse nach einem der Ansprüche 1 bis 5, **dadurch gekennzeichnet, dass** r ≤ (d-dₛ) ist, wobei dₛ die Dicke der Gleitschicht (3) ist.

7. Gleitlagerbuchse nach einem der Ansprüche 1 bis 6, **dadurch gekennzeichnet, dass** sich die Gleitschicht (3) der Gleitlagerbuchse (1) bis zur Stirnfläche (4) erstreckt.

8. Gleitlagerbuchse nach einem der Ansprüche 1 bis 7, **dadurch gekennzeichnet, dass** die Gleitschichten (3,12) von Gleitlagerbuchse (1) und Anlaufscheibe (10) aus denselben oder aus unterschiedlichen Materialien bestehen.

9. Gleitlagerbuchse nach einem der Ansprüche 1 bis 8, **dadurch gekennzeichnet, dass** mindestens eine Gleitschicht (3,12) aus einem wärmeempfindlichen Material besteht.

10. Gleitlagerbuchse nach einem der Ansprüche 1 bis 9, **dadurch gekennzeichnet, dass** beide Gleitschichten (3,12) aus Kunststoffmaterialien und/oder aus metallischen Legierungen bestehen.

11. Gleitlagerbuchse nach einem der Ansprüche 1 bis 9, **dadurch gekennzeichnet, dass** eine Gleitschicht (3 oder 12) aus einem Kunststoffmaterial und eine Gleitschicht (3 oder 12) aus einer metallischen Legierung besteht.

12. Verwendung einer Gleitlagerbuchse (1) nach einem der Ansprüche 1 bis 11 in Dieseleinspritzpumpen.

13. Verwendung einer Gleitlagerbuchse (1) nach einem der Ansprüche 1 bis 11 in automatischen Getrieben.

14. Verwendung einer Gleitlagerbuchse (1) nach einem der Ansprüche 1 bis 11 in Lüftermotoren, insbesondere in Lüftermotoren von Lastkraftwagen.

15. Verwendung einer Gleitlagerbuchse (1) nach einem der Ansprüche 1 bis 11 in Schwingungsdämpfern.

## Claims

1. Plain bearing bush having at least one thrust washer (10), the plain bearing bush (1) and the thrust washer (10) each having a steel back (2, 11) and at least one sliding layer (3, 12), wherein the thrust washer (10) being constructed in one piece or several pieces, **characterised in that** the thrust washer (10) is secured to the end face (4) of the plain bearing bush (1) by means of laser welding and **in that** r < d, where d designates the radial thickness of the plain bearing bush (1) and r the radial extent of the contact face of the end face (4) of the plain bearing bush (1).

2. Plain bearing bush according to claim 1, **characterised in that** the thrust washer (10) is secured to the end face of the plain bearing bush (1) by means of inner-side laser welding, in which the laser beam (25) is directed towards the inner side of the thrust washer (10) and plain bearing bush (1).

3. Plain bearing bush according to claim 1 or claim 2, **characterised in that** r ≥ 0.5*d.

4. Plain bearing bush according to claim 3, **characterised in that** r > 0.7*d.

5. Plain bearing bush according to claim 3 or claim 4, **characterised in that** r > 0.8*d.

6. Plain bearing bush according to any one of claims 1 to 5, **characterised in that** r ≤ (d-dₛ), where dₛ is the thickness of the sliding layer (3).

7. Plain bearing bush according to any one of claims 1 to 6, **characterised in that** the sliding layer (3) of the plain bearing bush (1) extends as far as the end face (4).

8. Plain bearing bush according to any one of claims 1 to 7, **characterised in that** the sliding layers (3, 12) of the plain bearing bush (1) and thrust washer (10) comprise the same or different materials.

9. Plain bearing bush according to any one of claims 1 to 8, **characterised in that** at least one sliding layer (3, 12) comprises a heat-sensitive material.

10. Plain bearing bush according to any one of claims 1 to 9, **characterised in that** both sliding layers (3, 12) comprise plastics materials and/or metal alloys.

11. Plain bearing bush according to any one of claims 1 to 9, **characterised in that** one sliding layer (3 or 12) comprises a plastics material and one sliding layer (3 or 12) comprises a metal alloy.

12. Use of a plain bearing bush (1) according to any one of claims 1 to 11 in diesel injection pumps.

13. Use of a plain bearing bush (1) according to any one of claims 1 to 11 in automatic gear mechanisms.

14. Use of a plain bearing bush (1) according to any one of claims 1 to 11 in ventilated motors, in particular in ventilated motors of lorries.

15. Use of a plain bearing bush (1) according to any one of claims 1 to 11 in vibration dampers.

## Revendications

1. Coussinet lisse (1) avec au moins une rondelle de butée (10), sachant que le coussinet lisse (1) et la rondelle de butée (10) présentent chacun un dos en acier (2, 11) et au moins un revêtement antifriction (3, 12), et sachant que la rondelle de butée (10) est réalisée en une ou plusieurs parties, **caractérisé en ce que** la rondelle de butée (10) est fixée sur le côté frontal (4) du coussinet lisse (1) par soudage au laser et **en ce qu'**on a r < d, où d est l'épaisseur radiale du coussinet lisse (1) et r l'étendue radiale de la surface de contact de la face frontale (4) du coussinet lisse (1).

2. Coussinet lisse selon la revendication 1, **caractérisé en ce que** la rondelle de butée (10) est fixé sur le côté frontal du coussinet lisse (1) par soudage au laser intérieur, selon lequel le faisceau laser (25) est dirigé sur le côté intérieur de la rondelle de butée (10) et du coussinet lisse (1).

3. Coussinet lisse selon la revendication 1 ou 2, **caractérisé en ce qu'**on a r ≥ 0,5*d.

4. Coussinet lisse selon la revendication 3, **caractérisé en ce qu'**on a r > 0,7*d.

5. Coussinet lisse selon la revendication 3 ou 4, **caractérisé en ce que** qu'on a r > 0,8*d.

6. Coussinet lisse selon l'une des revendications 1 à 5, **caractérisé en ce qu'**on a r ≤ (d-dₛ), où dₛ est l'épaisseur du revêtement antifriction (3).

7. Coussinet lisse selon l'une des revendications 1 à 6, **caractérisé en ce que** le revêtement antifriction (3) du coussinet lisse (1) s'étend jusqu'à la face frontale (4).

8. Coussinet lisse selon l'une des revendications 1 à 7, **caractérisé en ce que** les revêtements antifriction (3, 12) du coussinet lisse (1) et de la rondelle de butée (10) sont constitués du même matériau ou de matériaux différents.

9. Coussinet lisse selon l'une des revendications 1 à 8, **caractérisé en ce qu'**au moins un revêtement antifriction (3, 12) est constitué d'un matériau thermosensible.

10. Coussinet lisse selon l'une des revendications 1 à 9, **caractérisé en ce que** les deux revêtements antifriction (3, 12) sont constitués de matières plastiques et/ou d'alliages métalliques.

11. Coussinet lisse selon l'une des revendications 1 à 9, **caractérisé en ce qu'**un revêtement antifriction (3 ou 12) est constitué d'une matière plastique et un revêtement antifriction (3 ou 12) d'un alliage métallique.

12. Utilisation d'un coussinet lisse (1) selon l'une des revendications 1 à 11 dans des pompes d'injection de moteurs Diesel.

13. Utilisation d'un coussinet lisse (1) selon l'une des revendications 1 à 11 dans des boîtes automatiques.

14. Utilisation d'un coussinet lisse (1) selon l'une des revendications 1 à 11 dans des moteurs de ventilateurs, en particulier dans des moteurs de ventilateurs de camions.

15. Utilisation d'un coussinet lisse (1) selon l'une des revendications 1 à 11 dans des amortisseurs de vibrations.
